# FASCICULE DE BREVET EUROPEEN

(11) **EP 2 580 827 B1**
(45) Date de publication et mention de la délivrance du brevet: **14.05.2014**
(21) Numéro de dépôt: 11792001.7
(22) Date de dépôt: 07.06.2011
(51) Int. Cl.: F16B 13/00, F16M 13/02, H02G 3/22, H02G 7/05

(54) **DISPOSITIF, KIT ET PROCEDE D'ANCRAGE D'UN ELEMENT SUR UNE FACE EXTERIEURE D'UN MUR D'UN BATIMENT**
VORRICHTUNG, KIT UND VERFAHREN ZUR VERANKERUNG EINES ELEMENTS AN EINER AUSSENFLÄCHE ODER WAND EINES GEBÄUDES
DEVICE, KIT AND METHOD FOR ANCHORING AN ELEMENT ON AN EXTERIOR FACE OF A WALL OF A BUILDING

(30) Priorité: 08.06.2010 FR 1054505
(43) Date de publication de la demande: 17.04.2013
(73) Titulaire: Orange, 75015 Paris (FR)
(72) Inventeur: KUHN, Jean-Pierre, F-67100 Strasbourg (FR)
(74) Mandataire: Regimbeau
(86) Numéro de dépôt international: PCT/FR2011/051287
(87) Numéro de publication internationale: WO 2011/154653

(56) Documents cités:
- FR-A1- 2 783 646
- US-A- 3 269 679
- US-A- 5 447 400

## Description

La présente invention a trait à un dispositif, un kit et un procédé d'ancrage d'un élément sur une face extérieure d'un mur d'un bâtiment.

Elle s'applique notamment à l'ancrage de câbles aériens, tels des câbles téléphoniques ou électriques, sur la face extérieure d'un bâtiment d'un abonné, mais également à l'installation de tout type de dispositif (caméra de surveillance, projecteur, etc.).

Toutefois l'invention sera principalement illustrée dans le contexte d'un réseau téléphonique public où la partie terminale du réseau est constituée de câbles aériens fixés à des poteaux. Le raccordement physique d'un abonné à ce réseau aérien comprend alors le déploiement d'un câble abonné depuis l'un des poteaux vers l'intérieur de l'habitation de l'abonné.

Les règles d'ingénieries prévues pour le raccordement d'un abonné au réseau public comprennent notamment un ancrage du câble sur la face extérieure d'un mur d'un bâtiment de l'abonné.

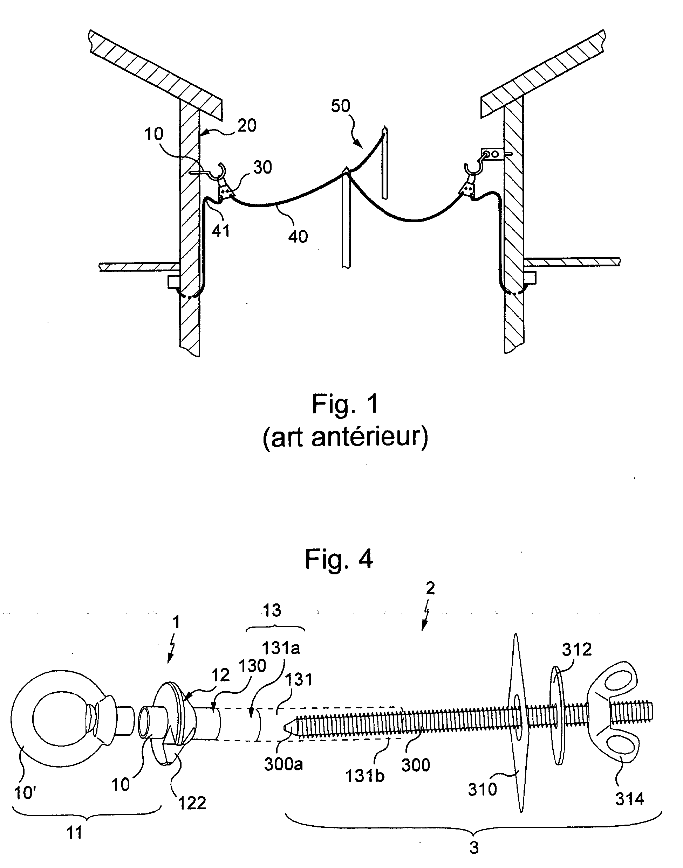

Comme schématiquement représenté sur la figure 1, les techniques classiques d'ancrage de câbles aériens, telles qu'évoquées par les publications FR 2 783 646 et WO 2006/125783, comprennent un crochet 10 d'accroche qui est fixé directement sur une face extérieure d'un mur 20 d'un bâtiment et donc tourné vers l'extérieur, et qui supporte un tendeur 30 de câble téléphonique 40. Ce tendeur 30 permet de maintenir une tension sensiblement constante du câble aérien abonné 40 vers le poteau du réseau public 50.

La fixation du crochet 10 par un opérateur sur la face extérieure du bâtiment est généralement réalisée à l'aide de nacelles permettant à l'opérateur d'accéder aux parties hautes de la face extérieure du bâtiment.

Grâce au tendeur 30, le câble abonné 41 en aval de celui-ci est dépourvu de contraintes de tension. Ainsi, grâce au tendeur 30, il est possible déporter la pénétration de ce câble 41 à l'intérieur de l'habitation, par exemple en le faisant longer la face extérieure du bâtiment jusqu'au point de pénétration du câble 41 dans le bâtiment.

Cela permet de dissocier le point d'ancrage du point de pénétration pour permettre un ancrage lorsque le point de pénétration n'est pas approprié pour l'ancrage. Dans ce cas, le câble 41 est différent du câble 40 (par exemple un câble 41 moins visible sur le mur, notamment blanc ou écru, alors que le câble 40 est notamment un câble dont l'extérieur est en néoprène noir). Un boitier extérieur permettant de contenir le raccordement de ces deux câbles 40 et 41 est alors nécessaire créant un point de coupure avec donc des risques supplémentaires de problèmes de transmission..

De telles interventions dans les parties hautes de faces extérieures de bâtiments s'avèrent être délicates et dangereuses, notamment en cas d'intempéries.

En outre, dans certaines configurations, l'accès aux parties hautes de la face extérieure d'un bâtiment n'est pas possible: face extérieure trop lointaine, nacelle ou échelle trop courte, sol meuble, obstacle devant la face extérieure du bâtiment, etc. Dans ce cas, il n'est pas toujours possible d'accéder aux emplacements requis pour fixer le crochet d'ancrage ni aux emplacements requis pour faire pénétrer le câble.

La mise en oeuvre de moyens d'accès plus sophistiqués, tels que des échafaudages, des camions nacelle grand déport ou des opérateurs en rappel depuis les toits s'avère être excessivement coûteuse et consommatrice de temps (déploiement, intervention et rangement).

Enfin, même si la face extérieure d'un bâtiment est accessible, il n'est pas toujours possible d'accéder à l'emplacement de fixation idéal: fixer le plus haut possible, dans un endroit discret, etc.

De façon générale, il existe donc un besoin d'améliorer les techniques d'ancrage d'un élément, qu'il soit de type câble téléphonique ou autre dispositif, sur une face extérieure d'un bâtiment.

Dans ce dessein, la présente invention propose notamment un dispositif d'ancrage d'un élément sur une face extérieure d'un mur d'un bâtiment, comprenant une partie externe munie d'un moyen d'accroche dudit élément et destinée à être tournée vers l'extérieur, **caractérisé en ce qu**'il comprend :
- une partie intermédiaire constituant un moyen d'appui sur ladite face extérieure;
- une partie interne apte à être insérée dans un trou traversant ledit mur,
et ladite partie interne comprend un premier moyen partiel de fixation et un moyen de guidage apte à être inséré dans ledit trou traversant pour guider un deuxième moyen partiel de fixation traversant ledit mur et apte à coopérer avec ledit premier moyen partiel de fixation.

Le dispositif selon l'invention permet ainsi d'installer plus facilement l'ancrage sur une face extérieure d'un mur d'un bâtiment à n'importe quel endroit souhaité. Cette facilité d'installation est obtenue par la présence combinée du premier moyen partiel de fixation et du moyen de guidage associé qui permettent, ensemble, de fixer l'ancrage depuis l'intérieur de l'habitation définie par ladite face extérieure d'un bâtiment. En effet, le moyen de guidage assure la fixation aisée (par exemple par vissage), à "l'aveugle" dans le trou traversant, du deuxième moyen partiel de fixation au premier moyen partiel de fixation.

La partie intermédiaire assure l'appui contre la face extérieure du bâtiment, notamment en étant plaquée contre cette dernière lors de la coopération des deux moyens partiels pour fixation. Ainsi une intervention directement sur l'extérieur de la face extérieure du bâtiment est évitée.

Dans un mode de réalisation, ledit moyen de guidage comprend un tube dont une extrémité est coaxiale audit premier moyen partiel de fixation. L'utilisation d'un tube pour guider le deuxième moyen partiel de fixation (par exemple une tige filetée) s'avère extrêmement efficace, autant de par sa simplicité de conception que par sa capacité à guider précisément ce deuxième moyen partiel de fixation dès lors que son extrémité (côté dispositif d'ancrage) est alignée (coaxiale) avec le premier moyen partiel de fixation.

En particulier, ledit tube présente une longueur au moins égale à l'épaisseur dudit mur au niveau dudit trou traversant. Cette disposition simplifie les opérations pour la personne installant le dispositif, car elle permet d'engager visuellement le guidage par le tube. L'éventuel surplus de tube du côté intérieur du mur sera ôté, notamment par découpage, pour assurer une bonne fixation par l'intérieur.

Selon une caractéristique de l'invention, ladite partie intermédiaire comprend une ouverture agencée pour le passage d'un câble. Cette disposition permet notamment de tirer profit du trou traversant pour faire passer un câble, par exemple un câble téléphonique ou un câble d'alimentation de l'élément à ancrer sur la face extérieure d'un bâtiment. Ainsi, la pénétration du câble n'est pas déportée par rapport au point d'ancrage, et un raccordement extérieur n'est plus nécessaire réduisant d'autant les problèmes de coupure ou de transmission.

Notamment, le dispositif d'ancrage comprend un moyen de fixation dudit câble. En rendant le câble solidaire du dispositif d'ancrage, ce câble peut être utilisé, lorsqu'il est passé dans le trou traversant, pour tirer le dispositif d'ancrage contre la face extérieure d'un bâtiment, aux fins d'opérer sa fixation.

En particulier, le dispositif d'ancrage comprend un moyen d'accolement dudit câble audit moyen de guidage, sensiblement à hauteur dudit premier moyen partiel de fixation. Cette disposition garantie qu'en tirant le dispositif d'ancrage à l'aide dudit câble, le premier moyen partiel de fixation est aligné avec le trou traversant. Ainsi, la fixation du dispositif à l'aide du deuxième moyen partiel de fixation est rendue plus aisée.

Selon une caractéristique de l'invention, ledit moyen d'accroche est sensiblement coaxial audit premier moyen partiel de fixation. Ainsi, est obtenu un alignement du trou traversant, avec les moyens partiels de fixation et le moyen d'accroche. Il en résulte notamment une meilleure compacité du dispositif d'ancrage, et donc une occupation réduite de la face extérieure d'un bâtiment.

Selon une autre caractéristique de l'invention, ladite partie intermédiaire est de largeur supérieure à celle de la partie interne de sorte que, lorsque le dispositif est fixé, ladite partie intermédiaire est plaquée contre ladite face extérieure du mur. Notamment, dans ce cas, le trou traversant est de section intermédiaire entre ces deux largeurs. Cela permet, lorsque le deuxième moyen partiel de fixation est également maintenu du côté intérieur du mur par appui sur celui-ci, de réaliser une fixation solide du dispositif d'ancrage, par étau de part et d'autre du mur.

Selon une autre caractéristique, ladite partie intermédiaire est inclinable par rapport à un ensemble solidaire formé des parties interne et externe. Ainsi, le dispositif selon l'invention peut s'adapter aux irrégularités de la face extérieure d'un bâtiment ou à d'éventuels percements en oblique du trou traversant dans lequel la partie interne doit être engagée.

Dans un mode de réalisation, le dispositif comprend une portion rigide s'étendant depuis une zone d'appui constituant ledit moyen d'appui de la partie intermédiaire, la portion rigide présentant des dimensions adaptées à une introduction dans ledit trou traversant et à bloquer automatiquement ledit dispositif dans le trou traversant lorsqu'un effort latéral lui est appliqué. Ce mécanisme d'autoblocage mécanique assure le maintien du dispositif d'ancrage et donc une détérioration réduite de celui-ci et de la face extérieure du mur lorsque des contraintes latérales (vent, tension de câble) sont appliquées sur le dispositif.

L'invention concerne également un kit comprenant un dispositif d'ancrage tel que décrit ci-dessus et un deuxième moyen partiel de fixation apte à coopérer avec ledit premier moyen partiel de fixation, de sorte à plaquer ladite partie intermédiaire contre la face extérieure du mur.

Ce kit présente les mêmes avantages que le dispositif d'ancrage, à savoir notamment de permettre l'installation de ce dernier depuis le côté intérieur du mur d'un bâtiment.

En particulier, les premier et deuxième moyens partiels de fixation forment un système écrou-vis. De préférence, il s'agit d'une tige filetée venant s'engager dans un écrou solidaire du dispositif d'ancrage. Bien entendu, l'inverse est toutefois envisageable.

Le système de fixation de type écrou-vis s'avère simple à mettre en oeuvre et précis même en aveugle lorsqu'il est utilisé avec des moyens de guidage.

Selon une caractéristique particulière, l'extrémité finale du moyen partiel de fixation de type vis (par exemple une tige filetée) apte à coopérer avec l'autre moyen partiel de fixation de type écrou est dépourvue de filetage. Le filetage terminal de la tige filetée peut être supprimé en limant l'extrémité de la tige en biseau ou arrondi par exemple.

Cette extrémité dépourvue de filetage constitue alors un moyen complémentaire de guidage de la tige filetée dans l'écrou correspondant. En effet, la partie non filetée peut s'engager dans l'écrou sans nécessiter de vissage.

Ainsi, cette disposition permet d'améliorer le guidage et donc l'engagement des moyens coopérant pour la fixation du dispositif d'ancrage.

Selon une caractéristique de l'invention, le deuxième moyen partiel de fixation comprend, à une extrémité opposée à celle coopérant avec ledit premier moyen partiel de fixation, un moyen réglable d'appui agencé pour exercer un appui sur un côté intérieur du mur qui est opposé à l'appui exercé par ladite partie intermédiaire contre la face extérieure du mur. Cette disposition assure une fixation solide du dispositif d'ancrage, par étau de part et d'autre du mur.

Corrélativement, l'invention concerne également un procédé d'ancrage d'un élément sur une face extérieure d'un mur d'un bâtiment, le mur définissant un côté intérieur et un côté extérieur, caractérisé en ce qu'il comprend les étapes suivantes:
- passer, depuis le côté intérieur du mur, une ligne dans un trou traversant ledit mur;
- fixer ladite ligne à un dispositif d'ancrage d'élément, le dispositif d'ancrage comprenant un moyen d'accroche dudit élément, un moyen d'appui, un premier moyen partiel de fixation et un moyen de guidage apte à guider un deuxième moyen partiel de fixation agencé pour coopérer avec ledit premier moyen partiel ;
- tirer, depuis le côté intérieur, ladite ligne de sorte à introduire au moins ledit moyen de guidage dans ledit trou traversant en conservant le moyen d'accroche et le moyen d'appui du côté extérieur;
- fixer, depuis le coté intérieur et à l'aide dudit moyen de guidage, ledit deuxième moyen partiel de fixation audit premier moyen de fixation, de sorte à plaquer ledit moyen d'appui contre la face extérieure du mur et avoir ledit moyen d'accroche tourné vers l'extérieur.

Le terme "ligne" regroupe, selon les applications envisagées ci-après, tout type de fil, cordage, corde ou câble ou équivalents, notamment de simples cordes, des câbles/cordons/fils électriques et des câbles téléphoniques. Selon l'invention, la "ligne" sert à tirer un ensemble d'éléments (ici le dispositif d'ancrage) de part sa fixation à celui-ci, au même titre qu'une "ligne de pêche".

Le procédé d'ancrage présente des avantages similaires à ceux du dispositif et du kit exposés ci-dessus, notamment celui de permettre l'ancrage d'un élément sur une face extérieure d'un mur de bâtiment depuis le côté intérieur du mur.

De façon optionnelle, le procédé peut comprendre des étapes se rapportant aux caractéristiques du dispositif ou du kit exposé précédemment.

Notamment, l'étape de fixation de la ligne accole la ligne au moyen de guidage sensiblement à hauteur dudit premier moyen partiel de fixation. Cette disposition permet, après avoir tiré le dispositif d'ancrage contre la face extérieure du bâtiment, d'avoir aligné le premier moyen partiel de fixation avec le trou traversant. Ainsi, la fixation à l'aide du deuxième moyen partiel de fixation est rendue plus aisée.

Par ailleurs, il peut être prévu que le moyen de guidage comprend une extrémité fixée au dispositif d'ancrage et une extrémité opposée, et l'étape de fixation de la ligne accole la ligne au moyen de guidage sensiblement au niveau de l'extrémité opposée. Cette disposition améliore l'introduction du moyen de guidage dans le trou traversant lorsque la ligne est tirée.

Selon une caractéristique de l'invention, ledit élément à ancrer comprend un câble, par exemple un câble d'alimentation ou un câble téléphonique, et ladite ligne comprend ledit câble. Dans cette configuration, le câble passé dans le trou traversant est fixé à l'élément, puis le câble de l'élément est utilisé pour tirer le dispositif d'ancrage auquel est accroché ledit élément. De la sorte, le câble du côté intérieur du mur a déjà été introduit, sans intervenir à l'extérieur après l'ancrage comme cela est le cas dans les techniques connues. Ainsi la pénétration du câble n'est pas déportée par rapport au point d'ancrage, et un raccordement extérieur n'est plus nécessaire.

Selon une encore autre caractéristique de l'invention, lors du tirage de ladite ligne, ledit premier moyen partiel de fixation est introduit au moins partiellement dans ledit trou traversant. Cette introduction partielle permet notamment d'axer le premier moyen partiel de fixation dans l'axe du trou traversant. Ainsi la fixation à l'aide du deuxième moyen partiel de fixation est rendue plus aisée.

Selon une encore autre caractéristique de l'invention, le procédé comprend une étape de fixation dudit deuxième moyen partiel de fixation contre le côté intérieur du mur. Comme évoqué précédemment, cela peut être réalisé par serrage d'un moyen d'appui sur le côté intérieur du mur.

D'autres particularités et avantages de l'invention apparaîtront dans la description ci-après, illustrée par les dessins ci-joints, dans lesquels :
- la **figure 1** illustre l'ancrage d'un tendeur de câble téléphonique selon l'état de l'art;
- les **figures 2** à **5** représentent schématiquement différents modes de réalisation d'un dispositif d'ancrage et d'un kit selon l'invention;
- les **figures 6** représentent schématiquement les différentes étapes de mise en oeuvre de l'invention pour installer un dispositif d'ancrage selon l'un quelconque des modes de réalisation des **figures 2** à **5****;** et
- la **figure 7** illustre une application de l'invention à l'ancrage d'une caméra de surveillance.

Selon l'invention, l'ancrage d'un élément sur une face extérieure d'un mur d'un bâtiment, notamment d'une habitation, est réalisé à l'aide d'un dispositif d'ancrage muni d'un moyen d'accroche de l'élément, d'un moyen d'appui pour s'appuyer sur la face extérieure, d'un premier moyen partiel de fixation et d'un moyen de guidage apte à guider un deuxième moyen partiel de fixation agencé pour coopérer avec ledit premier moyen partiel.

La fixation du dispositif d'ancrage consiste alors à ramener, à l'aide d'un fil ou d'un câble accroché au dispositif d'ancrage et passant à travers un trou traversant le mur, ledit dispositif d'ancrage de sorte à introduire, depuis l'intérieur du mur, ledit moyen de guidage dans le trou traversant.

Ainsi, depuis le coté intérieur du mur et à l'aide dudit moyen de guidage, ledit deuxième moyen partiel de fixation peut être fixé audit premier moyen de fixation pour plaquer le moyen d'appui contre la face extérieure du mur, et donc fixer le dispositif d'ancrage.

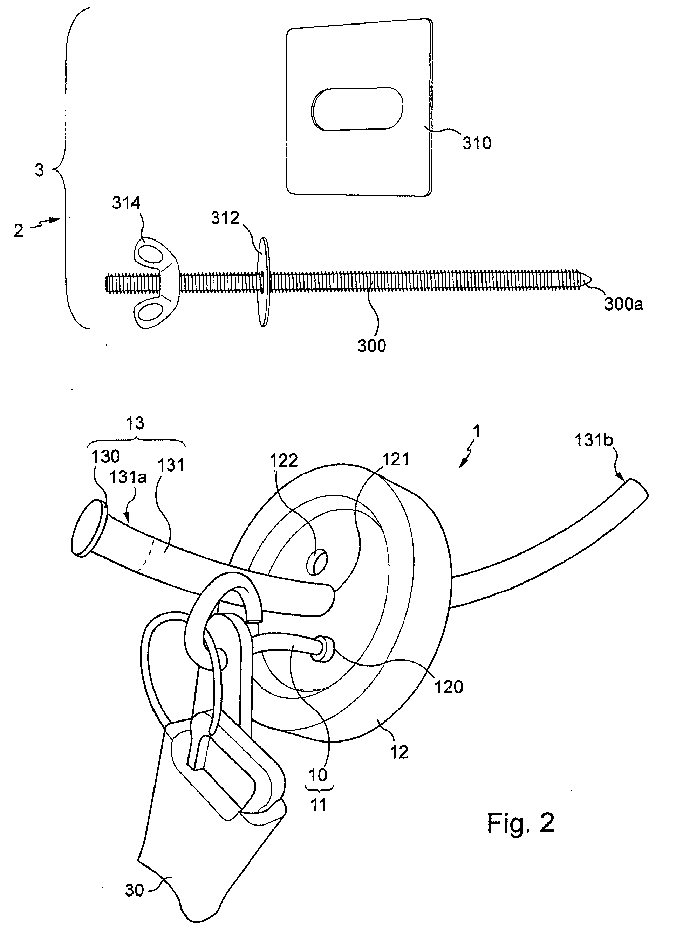

Les **figures 2** à **5** représentent schématiquement différents modes de réalisation d'un dispositif d'ancrage 1 et d'un kit 2 selon l'invention.

Un kit d'ancrage 2 comprend un dispositif d'ancrage 1 et un moyen complémentaire de fixation 3.

Le dispositif d'ancrage 1 comprend une partie externe 11 (à gauche sur les figures) munie d'un moyen d'accroche 10 pour accrocher un élément 30 à une face extérieure d'un mur d'un bâtiment.

Dans une application de réseau téléphonique ou électrique, l'élément 30 à accrocher peut être un tendeur de câble téléphonique ou électrique.

D'autres applications peuvent être envisagées, telles que l'ancrage d'un dispositif électronique (une caméra de surveillance, un projecteur, un détecteur d'alarme, etc.) ou d'une pancarte par exemple.

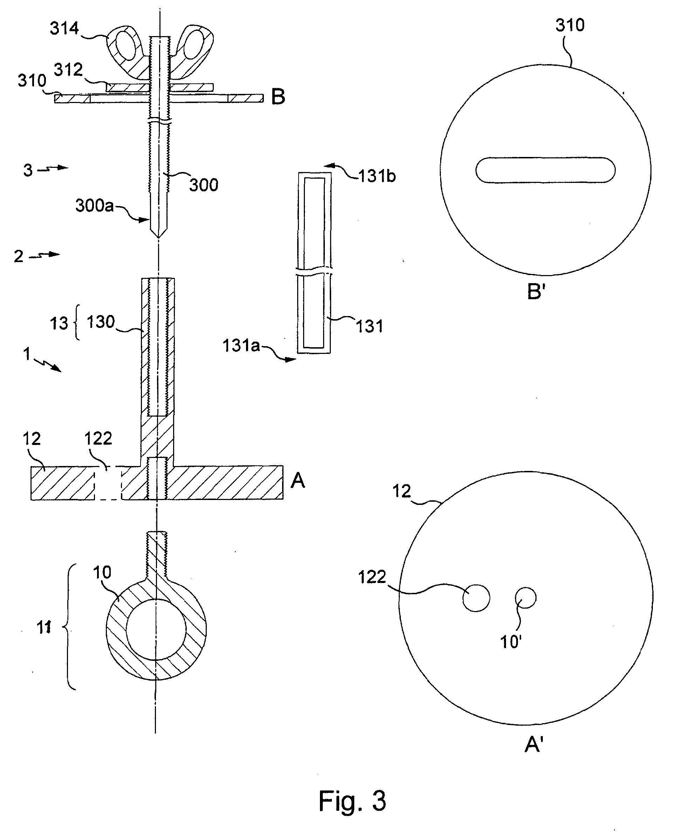

Sur les **figures 2** et **3****,** le moyen d'accroche 10 prend la forme d'un crochet suffisamment fermé ou d'un anneau vissé sur une partie intermédiaire 12. Sur la **figure 4****,** ce moyen d'accroche 10 prend la forme d'un écrou fileté sur lequel peut être vissé un crochet ou un anneau 10', voire directement l'élément 30 à ancrer. A noter que le crochet ou anneau 10' peut être directement soudé sur la partie intermédiaire 12 telle que définie par la suite, et constituer le moyen d'accroche 10.

Le dispositif d'ancrage 1 comprend également:
- une partie intermédiaire 12 qui est utilisée comme surface d'appui sur ladite face extérieure du bâtiment lorsque le dispositif d'ancrage est en position fixée, comme décrit par la suite;
- une partie interne 13 permettant de fixer, en coopération avec le moyen complémentaire de fixation 3, le dispositif d'ancrage au mur de sorte que le moyen d'accroche 10 est positionné sur la face extérieure du bâtiment.

Sur les **figures 2** et **3****,** la partie intermédiaire 12 est formée d'une platine sensiblement plane ayant des dimensions très supérieures à celles de la partie interne 13.

Cette dernière 13 est formée d'un écrou borgne à tête plate 130 et d'un tube 131 souple, par exemple en matière plastique.

L'extrémité ouverte de l'écrou 130 est insérée en force dans une extrémité 131a du tube 131. L'écrou 130 et l'extrémité 131a du tube 131 sont ainsi coaxiaux. Comme décrit par la suite, ce tube 130 sert de guide pour guider le moyen complémentaire de fixation 3 de telle sorte que ce dernier vienne coopérer avec l'écrou 130 pour fixer le dispositif d'ancrage 1.

Le tube 131 est notamment de longueur supérieure à la longueur du trou traversant le mur et dans lequel il sera introduit. Cela permet, comme décrit par la suite, d'engager visuellement le moyen complémentaire de fixation 3 dans le tube de guidage.

Sur la **figure 2****,** la platine 12 comprend, sensiblement en son centre, au moins deux ouvertures 120, 121 destinées respectivement à la fixation du crochet 10 et au passage de l'écrou 130. L'ouverture 121 pour le passage de l'écrou est de diamètre inférieur à la tête plate de l'écrou 130 de sorte à bloquer ce dernier. Ainsi, en position d'utilisation l'écrou 130 et le tuyau 131 sont substantiellement positionnés du côté opposé au crochet 10, c'est-à-dire la partie interne 13 du dispositif 1.

Dans une application où l'élément à fixer comprend un fil ou câble, par exemple d'alimentation ou téléphonique, une troisième ouverture 122 peut être prévue dans la platine pour permettre le passage du fil ou câble.

Sur la **figure 3****,** la platine 12 est d'une seule pièce avec l'écrou borgne 130, et présente, dans l'alignement dudit écrou 130 et du côté opposé à celui-ci, un écrou borgne 10' pour recevoir l'anneau 10. Egalement, dans une application où l'élément à fixer comprend un fil ou câble, une ouverture 122 est prévue dans la platine pour permettre le passage du fil ou câble.

Sur la **figure 4****,** la partie interne 13 est constituée d'un écrou borgne 130 également apte à coopérer avec le moyen complémentaire de fixation 3, et d'un tube souple 131. De façon similaire aux **figures 2****,** **3** et **5****,** l'écrou 130 est introduit en force dans le tube 131 de telle sorte que l'extrémité 131a et l'écrou 130 sont coaxiaux pour un meilleur guidage du moyen complémentaire de fixation 3.

Les parties externe 11 et interne 12, ainsi que l'écrou borgne 130 sont formées d'une seule pièce de révolution, notamment dans un métal, et sont coaxiales, ce qui permet d'obtenir une compacité importante du dispositif d'ancrage 1, de façon similaire à la **figure 3****.**

La partie intermédiaire 12 s'étend de façon évasée depuis la partie interne 13. La partie intermédiaire 12 présente ainsi un diamètre supérieur à celui de la partie interne. Comme décrit par la suite, ce diamètre supérieur permet d'utiliser la partie intermédiaire 12 comme une surface d'appui contre la face extérieure d'un bâtiment, lors de la fixation du dispositif d'ancrage 1.

La forme conique (évasée) de la partie intermédiaire 12 confère en outre une capacité de centrage de l'écrou borgne 130 lorsque la partie interne 13 est introduite dans le trou traversant le mur du bâtiment comme décrit par la suite. En variante toutefois, la partie intermédiaire 12 peut présenter, du côté inférieur (c'est-à-dire du côté de la partie interne 13), une surface plane et non plus conique/évasée (**figure 3**).

Dans une application d'ancrage d'un dispositif électronique ou électrique équipé d'un fil ou câble, une ouverture ou encoche 122 prévue pour le passage du fil ou câble peut être prévu au niveau de la partie intermédiaire, comme montré sur la figure.

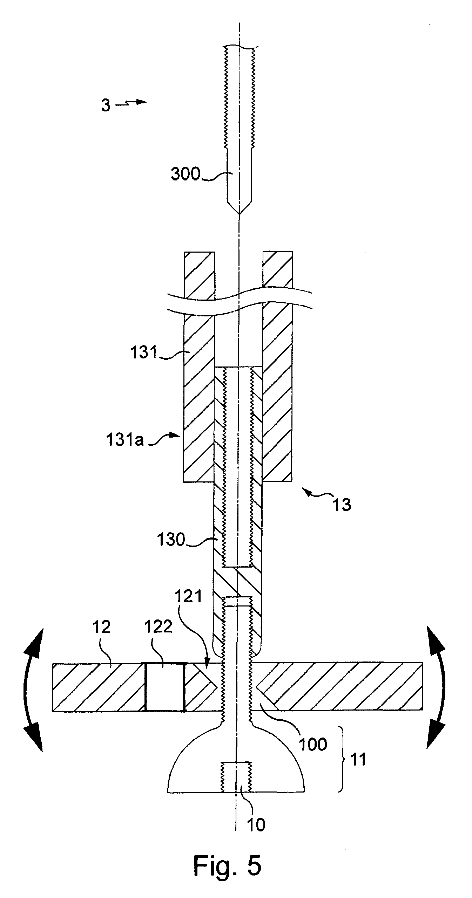

Dans le mode de réalisation de la **figure 5****,** le moyen d'accroche 10 (écrou borgne) est réalisé au centre d'une demi-sphère dont la partie opposée se termine par une tige filetée 100 que l'on passe dans l'ouverture 121 de la platine 12.

L'écrou borgne 130 est fixé à cette tige filetée 100, après son passage dans l'ouverture 121, l'ensemble solidaire écrou 130-moyen d'accroche 10 étant alors libre en rotation (liaison rotule) par rapport à la platine 12, notamment grâce à des dimensions légèrement supérieures de l'ouverture 121 par rapport à la tige filetée 100 et au profil évasé des deux côtés de l'ouverture 121, comme montré sur la figure. L'ouverture 121 est, en particulier réalisé, de telle sorte que la coupe de l'ouverture 121 dans la platine 12 forme un « V » dont la partie évasée vient s'appuyer contre la surface extérieure du bâtiment.

Cette configuration permet, lorsque le dispositif d'ancrage est fixé par serrage à l'aide du moyen complémentaire de fixation 3, d'obtenir un basculement relatif de la platine 12 par rapport à l'ensemble 10-130 (voir les flèches sur la figure), la partie sphérique du moyen d'accroche 10 venant s'appuyer sur les parties évasées.

L'inclinaison résultante de la platine 12 offre une meilleure adaptation aux irrégularités de surface de la face extérieure du bâtiment, ainsi qu'à d'éventuels défauts d'alignement (trou oblique traversant le mur).

Dans l'exemple de la figure, une ouverture 122 est également prévue dans la platine 12 pour le passage d'un câble depuis l'élément à accrocher vers l'intérieur de l'habitation.

De manière alternative, les ouvertures 121 et 122 communiquent pour former une seule et même ouverture. Ainsi, l'inclinaison de la platine 12 par rapport à l'ensemble 10-130 s'en trouve faciliter dans l'axe formé par les ouvertures 121 et 122 communicantes. En outre, cela facilite la fabrication d'une platine 12 de petite taille sans remettre en cause l'intégrité de la platine une fois le passage de l'ensemble 10-130 et le passage du câble percé.

Dans les kits 2 des **figures 2** à **5****,** le moyen complémentaire de fixation 3 comprend une tige filetée 300 utilisée, dans l'invention, comme moyen partiel de fixation complémentaire de l'écrou borgne 130. Ces deux moyens partiels de fixation sont donc prévus pour coopérer ensemble selon un système écrou-vis, par passage de la tige filetée dans le trou traversant le mur du bâtiment.

Bien entendu, dans une variante, la partie interne 13 peut comprendre une extrémité de tige filetée et le moyen complémentaire de fixation 3 comprendre une extrémité de type écrou apte à coopérer avec l'extrémité de tige filetée.

Comme montré sur les figures, la tige 300 est dépourvue de filetage sur l'extrémité terminale 300a destinée à coopérer avec l'écrou 130. Cela permet un engagement préalable de la tige filetée 300 dans l'écrou 130 avant vissage, et donc un alignement mécanique de ces deux éléments pour un meilleur vissage.

A titre d'illustration, pour un écrou borgne de 4 à 6 cm de profondeur, le filetage de la tige 300 peut être supprimé sur une longueur de 1,5 cm, par limage en biseau ou en arrondi.

En variante, le filetage sur l'entièreté de la tige filetée 300 peut toutefois être conservé.

Le moyen complémentaire de fixation 3 comprend également des éléments de serrage de la tige filetée 300 par appui contre le côté intérieur de la face extérieure d'un bâtiment. La tige filetée 300 étant prévue pour traverser le trou traversant le mur du bâtiment, ces éléments de serrage sont prévus à l'opposé de l'extrémité 300a.

Ces éléments de serrage peuvent comprendre une platine 310 présentant une ouverture pour le passage de la tige filetée 300 et d'un éventuel fil ou câble, une rondelle 312 de diamètre supérieur à l'ouverture et d'un écrou type papillon 314 pour serrer la rondelle et la platine contre le côté intérieur du mur, comme vu ci-après.

Ainsi, ces éléments de serrage 310, 312, 314 permettent d'exercer un appui sur le côté intérieur du mur qui est opposé à l'appui exercé par ladite partie intermédiaire 12 contre la face extérieure du bâtiment. De la sorte, le dispositif d'ancrage 1 est solidement fixé au mur serré en étau par, d'un côté, la partie intermédiaire 12, et de l'autre côté, la platine 310. Afin d'assurer l'étanchéité du bâtiment, des moyens étanches (non illustrés) telles qu'une mousse d'étanchéité, peuvent être placé entre la partie intermédiaire 12 et la face extérieure du bâtiment. En particulier, ces moyens étanches seront fixé à la partie intermédiaire 12. Les moyens étanches ont notamment des caractéristiques mécaniques d'expansion sous une pression mécanique telles que les moyens étanches viennent remplir les espaces vides entre la partie intermédiaire 12 et la surface extérieure du bâtiment ainsi qu'éventuellement une partie du trou 21 traversant le mur 20 à partir de cette surface extérieure du bâtiment.

On notera par ailleurs que ces éléments de serrage (et donc de desserrage) permettent également de rendre le dispositif d'ancrage 1 amovible, par exemple pour des opérations de maintenance ou de changement de batteries de l'élément qui y est accroché.

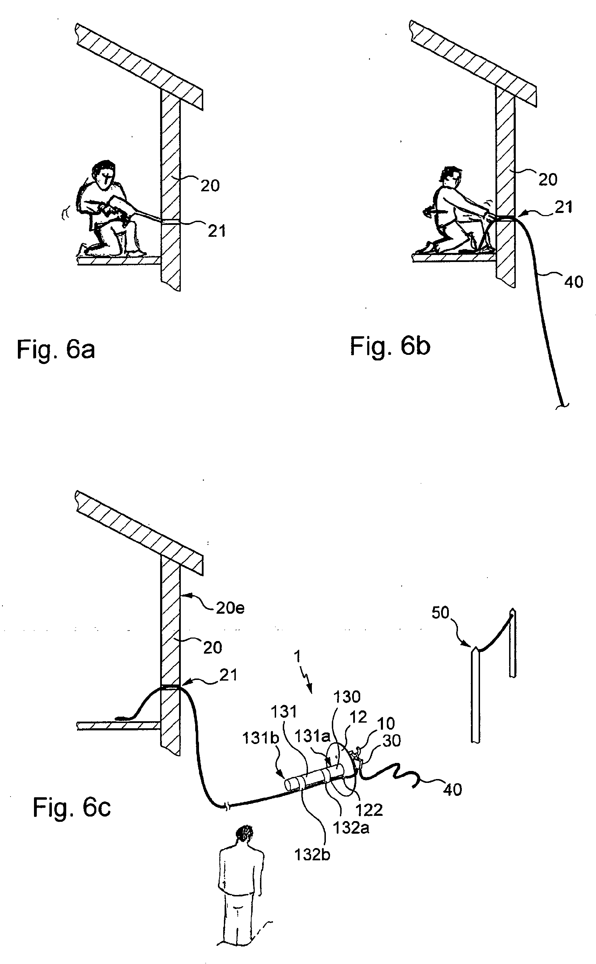

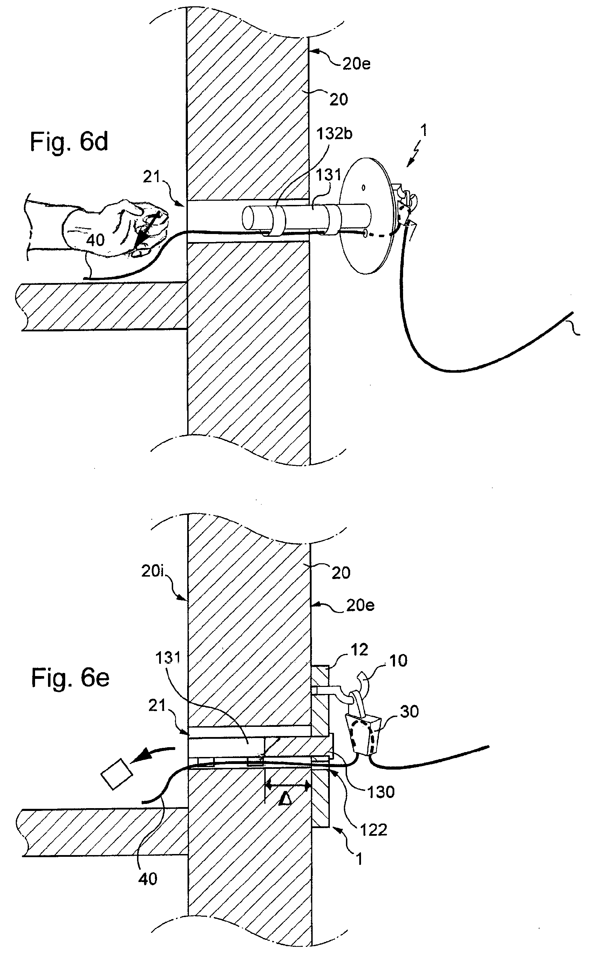

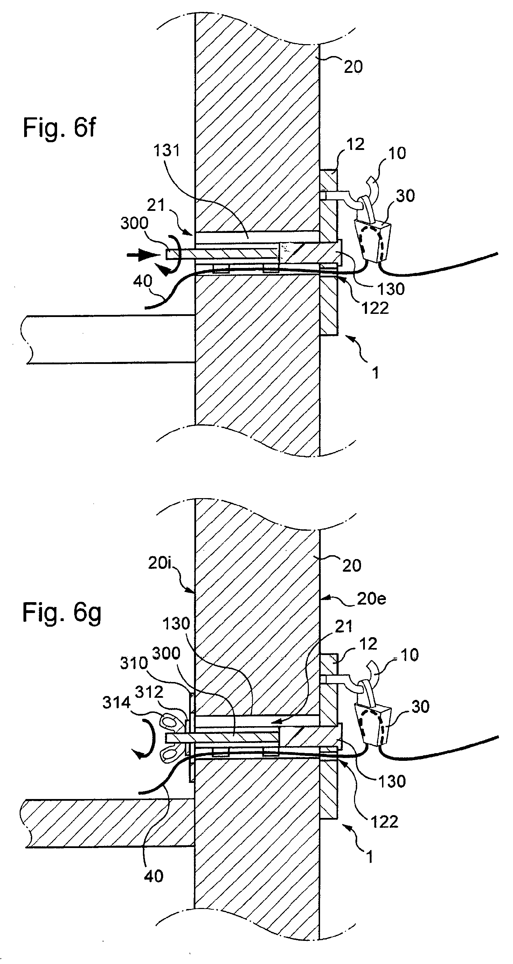

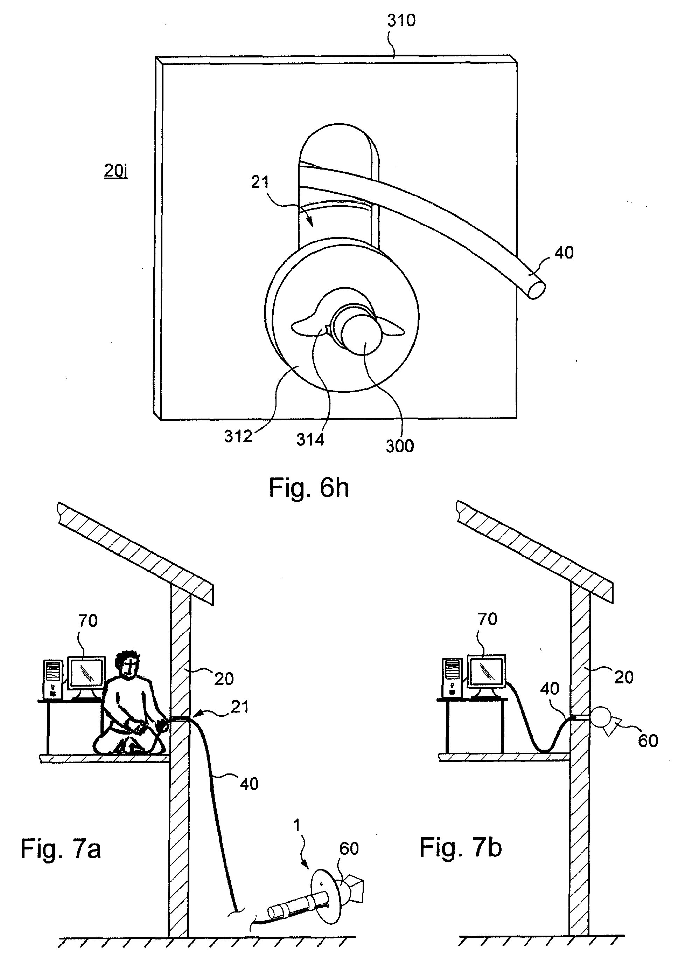

En référence maintenant à la **figure 6****,** est décrit le processus d'ancrage d'un câble téléphonique 40 et d'un tendeur 30, et notamment le processus de fixation du dispositif d'ancrage 1 d'un élément un mur 20 d'une habitation de sorte qu'un anneau d'accroche soit disposé sur la face extérieure du mur.

Sur la **figure 6a****,** un trou 21 traversant le mur 20 est réalisé depuis l'intérieur de l'habitation, au regard de l'endroit précis où l'opérateur souhaite positionner un ancrage pour un tendeur de câble téléphonique. La hauteur moyenne des étages dans les habitations rend ce percement simple à réaliser.

Un trou de diamètre 22mm peut être suffisant pour un dispositif 1 présentant un écrou 130 et un tube 131 de diamètres d'environ 15mm. D'une façon générale, le diamètre du trou 21 peut être égal à la somme des diamètres extérieurs du tube 131 et du câble ou fil 40, à laquelle une marge, par exemple entre 10 et 25%, notamment 25%, est ajoutée pour un passage aisé de l'ensemble dans le trou 21.

A noter qu'un tel percement peut être réalisé à l'avance lors de la construction de l'habitation.

Comme montré sur la **figure 6b****,** un câble téléphonique 40 est introduit dans le trou 21, depuis l'intérieur de l'habitation. Une fois le câble 40 passé, il est récupéré à l'extérieur pour être fixé au dispositif d'ancrage 1 (**figure 6c**).

Dans l'application de réseau téléphonique, une grande longueur de câble (longueur utile à l'extérieur + hauteur extérieure jusqu'au sol) est passée dans le trou 21 de sorte à permettre son raccordement au poteau électrique 50 (**figure 6c**).

Bien entendu pour des applications où l'élément à accrocher n'est pas équipé de câble, tout autre type de ligne, telle qu'une corde que l'on vient accrocher directement au dispositif d'ancrage 1, peut être utilisé.

Comme montré sur la **figure 6c****,** le câble 40 est alors fixé au dispositif d'ancrage 1 à l'extérieur, au pied de la face extérieure 20e du bâtiment.

Notamment, il est passé dans l'ouverture 122, puis dans le tendeur 30 accroché au crochet 10 du dispositif 1.

Le câble 40 est également fixé directement au dispositif d'ancrage 1, ici par l'utilisation d'un ruban adhésif ou autres bagues de serrage solidaires du dispositif 1, qui viennent accoler le câble 40 le long du tube 131 de guidage.

En particulier, le câble 40 est tout d'abord fixé au tube 131 à l'aide d'un ruban adhésif 132a sensiblement à hauteur de l'écrou borgne 130, et donc de l'extrémité 131a du tube. Cela permet lorsque l'on tirera sur le câble pour hisser et ramener le dispositif 1 vers le trou traversant 21, d'aligner l'écrou borgne 130 avec ledit trou 21.

Par ailleurs, le câble 40 est fixé à l'extrémité 131b du tube 131 (à l'aide d'un ruban adhésif 132b) de sorte, lors du même tirage, à garantir une introduction sans difficulté du tube 131 dans le trou 21.

A ce stade, l'élément à ancrer (tendeur, caméra, projecteur, etc.) est accroché, si nécessaire, sur le dispositif d'ancrage 1 au moyen de l'anneau 10.

L'étape suivante consiste donc à tirer, depuis l'intérieur de l'habitation, le câble 40 de sorte à hisser le dispositif d'ancrage 1 avec son élément accroché, et à introduire le tube 131 de guidage dans le trou traversant 21 grâce au ruban adhésif 132b qui entraîne son extrémité 131b dans le trou 21 (**figure 6d**).

En tirant jusqu'à plaquer la partie intermédiaire 12 du dispositif 1 contre la face extérieure 20e du bâtiment, l'écrou borgne 130 (**figure 6e**) est également introduit partiellement.

L'écrou borgne 130 peut présenter notamment une longueur (profondeur) de quelques centimètres, entre 4 et 6 cm. Ainsi, une fois engagé dans le trou 21, il est aligné avec ce dernier, ce qui permet un vissage plus aisée de la tige filetée 300 comme évoquée par la suite.

En outre, la grande longueur de l'écrou borgne 130 confère une grande résistance et tenue à un effort latéral exercé sur le crochet 10 une fois le dispositif 1 fixé. Ce peut être le cas lorsque, par exemple, le câble 40 est tendu vers un poteau de façon latérale par rapport à la face extérieure d'un bâtiment 20.

D'une façon générale, une portion rigide du dispositif 1 (au moins une partie de l'écrou borgne 130 et éventuellement une partie de la partie intermédiaire 12) est introduite dans le trou traversant 21 sur une longueur Δ suffisante pour que cette portion s'autobloque dans le mur lorsqu'une contrainte latérale par rapport à l'axe du trou est appliquée au dispositif. Dans l'application du réseau téléphonique, cela permet, lorsque le câble ne se présente pas en face du trou mais rasant (par exemple 30°) par rapport à la face extérieure 20e, que la tension du câble, une fois relié à un poteau du réseau, ne vienne pas faire bouger voire extraire le dispositif dans/du mur.

Pour un mur doté d'un revêtement extérieur de crépi (par exemple 2 à 3 cm), la portion introduite (la partie rigide qui s'étend depuis la surface d'appui sur la face extérieur 20e) peut être de longueur Δ supérieure au double de l'épaisseur du crépi, par exemple entre 6 et 7 cm.

Comme un tube 131 de longueur supérieure à celle du trou traversant 21 a été choisi, l'excédent de tube 131 qui dépasse du côté intérieur 20i du mur 20 (figure 6e) est coupé.

La connaissance de la longueur initiale du tube 131 et du surplus retiré permet notamment de connaître assez précisément la longueur de la tige filetée 300 qui sera nécessaire à la fixation du dispositif 1, et donc de couper celle-ci au préalable.

En référence à la **figure 6f****,** la tige filetée 300 est alors introduite dans le tube 131 de guidage, tout en maintenant le câble 40 afin de plaquer la partie intermédiaire 12 contre la face extérieure 20e du bâtiment. La grande longueur du tube permet une introduction visuelle et donc efficace.

Le tube de guidage 131 glissé sur l'écrou 130 permet d'introduire, en aveugle, l'extrémité 300a de la tige 300 dans l'écrou 130, puis de visser, toujours en aveugle, la tige filetée 300 dans l'écrou 130.

Une fois le vissage opéré, à l'aide des éléments de serrage 310, 312, 314, le dispositif d'ancrage 1 est serré et plaqué contre la face extérieure 20e du bâtiment (**figure 6g**). Cette opération permet de fixer solidement le dispositif 1 au mur de telle sorte que le crochet 10 est sur la face extérieure 20e, tourné vers l'extérieur et le tendeur 30 est également à l'extérieur, conformément aux règles d'ingénierie.

Comme il ressort de cette figure, la fixation du dispositif d'ancrage 1 consiste à serrer en étau le mur 20 dans son épaisseur à l'aide de la tige filetée 300 qui permet de plaquer la partie intermédiaire 12 contre la face extérieure 20e du mur et la platine 310 contre le côté intérieur 20i du mur.

Si nécessaire, l'excédent de tige filetée 300 du côté intérieur peut être coupé.

La **figure 6h** montre, de face, le montage obtenu côté intérieur 20i.

Une fois le dispositif 1 fixé, le câble 40 à l'extérieur peut être accroché au poteau 50 du réseau téléphonique.

La **figure 7** illustre un autre exemple de l'invention dans lequel une caméra doit être ancrée sur la face extérieure d'un mur 20.

Sur la **figure 7a****,** un câble 40 permettant une connexion de la caméra 60 avec un dispositif de visualisation et/ou d'enregistrement et/ou de transmission 70 (par exemple un câble USB) est passé dans le trou 21 puis arrimé au dispositif d'ancrage 1 auquel est accrochée la caméra 60. Au sol, le câble 40 est connecté à la caméra 60 et rendu solidaire du dispositif d'ancrage 1 de façon similaire à ce qui a été décrit en lien avec la **figure 6****.**

Si le câble 40 n'est pas suffisamment long, il peut être prolongé d'une corde.

En appliquant les différentes opérations précédemment décrites, un opérateur tire sur ce câble 40 pour ramener la caméra 60 sur la face extérieure du mur 20 à hauteur du trou 21, puis fixe le dispositif d'ancrage 1.

Une fois l'ensemble fixé (**figure 7b**), le câble 40 est connecté au dispositif 70 offrant ainsi une fonction de vidéo surveillance.

Ainsi, comme il ressort de ce qui précède, l'installation d'un ancrage selon l'invention se fait principalement depuis l'intérieur de l'habitation, avec une intervention minime à l'extérieur, qui plus est uniquement au sol.

En outre, l'invention permet d'introduire le câble 40 dans l'habitation en même temps que la fixation du dispositif 1. Il n'y a donc plus besoin d'avoir recours à deux opérations distinctes ni de prévoir des raccordements extérieurs entre câbles.

Par ailleurs, les éléments de serrage final 310, 312, 314 sont réversibles (desserrage possible), rendant le dispositif d'ancrage 1 démontable et réutilisable.

L'invention permet ainsi:
- un ancrage sur la face extérieure d'un mur d'un bâtiment en cas d'inaccessibilité de cette dernière;
- d'augmenter les possibilités d'ancrage en hauteur ou dans des zones difficiles d'accès depuis l'extérieur;
- de réduire les coûts d'intervention par la suppression de tout équipement ad hoc pour accéder aux parties hautes d'une face extérieure d'un bâtiment, et de réduire la durée des interventions;
- d'augmenter la sécurité des intervenants (pas d'intervention en hauteur, ni sous les intempéries);
- de faciliter les interventions, notamment de maintenance ou de changement des dispositifs d'ancrage.

L'ancrage selon l'invention présente en outre une grande simplicité technique et est donc de faible coût, rendant possible son utilisation pour la fixation de tout type d'élément, notamment par des particuliers.

Les exemples qui précèdent ne sont que des modes de réalisation de l'invention qui ne s'y limite pas.

Bien que, dans les exemples ci-dessus, le câble 40 équipant l'élément à accrocher est utilisé pour hisser et fixer le dispositif d'ancrage 1, il est possible d'avoir recours à une simple corde que l'on fixe au dispositif d'ancrage 1 ou audit câble, avant de hisser l'ensemble.

Dans le cas où l'on fixe la corde au dispositif d'ancrage 1, les techniques classiques peuvent être utilisées pour faire parvenir le câble 40 à l'intérieur de l'habitation (le long des murs et passage par un point de pénétration).

## Revendications

1. Dispositif (1) d'ancrage d'un élément (30, 60) sur une face extérieure (20e) d'un mur d'un bâtiment (20, 20e), comprenant une partie externe (11) munie d'un moyen d'accroche (10) dudit élément et destinée à être tournée vers l'extérieur, comprenant:
- une partie intermédiaire (12) constituant un moyen d'appui sur ladite face extérieure;
- une partie interne (13) apte à être insérée dans un trou (21) traversant ledit mur,
et ladite partie interne (13) comprenant un premier moyen partiel de fixation (130) **caractérisé en ce qu**'il comprend un moyen de guidage (131) apte à être inséré dans ledit trou traversant (21) pour guider un deuxième moyen partiel de fixation (3, 300) traversant ledit mur et apte à coopérer avec ledit premier moyen partiel de fixation (130).

2. Dispositif (1) selon la revendication 1, dans lequel ledit moyen de guidage comprend un tube (131) dont une extrémité (131a) est coaxiale audit premier moyen partiel de fixation (130).

3. Dispositif (1) selon la revendication 1, dans lequel ladite partie intermédiaire (12) comprend une ouverture (122) agencée pour le passage d'un câble (40).

4. Dispositif (1) selon la revendication 3, comprenant un moyen d'accolement (132a) dudit câble (40) audit moyen de guidage (131), sensiblement à hauteur dudit premier moyen partiel de fixation (130).

5. Dispositif (1) selon la revendication 1, dans lequel ledit moyen d'accroche (10) est sensiblement coaxial audit premier moyen partiel de fixation (130).

6. Dispositif (1) selon la revendication 1, dans lequel ladite partie intermédiaire (12) est de largeur supérieure à celle de la partie interne (13) de sorte que, lorsque le dispositif (1) est fixé, ladite partie intermédiaire est plaquée contre ladite face extérieure (20e) du mur (20).

7. Dispositif (1) selon la revendication 1, comprenant une portion rigide s'étendant depuis une zone d'appui constituant ledit moyen d'appui de la partie intermédiaire (12), la portion rigide présentant des dimensions adaptées à une introduction dans ledit trou traversant (21) et à bloquer automatiquement ledit dispositif (1) dans le trou traversant (21) lorsqu'un effort latéral lui est appliqué.

8. Kit (2) comprenant un dispositif d'ancrage (1) selon la revendication 1 et un deuxième moyen partiel de fixation (3, 300) apte à coopérer avec ledit premier moyen partiel de fixation (130), de sorte à plaquer ladite partie intermédiaire (12) contre la face extérieure du mur (20).

9. Kit (2) selon la revendication 8, dans lequel les premier et deuxième moyens partiels de fixation (131, 300) forment un système écrou-vis.

10. Kit (2) selon la revendication précédente, dans lequel l'extrémité finale (300a) du moyen partiel de fixation de type vis (300) apte à coopérer avec l'autre moyen partiel de fixation de type écrou (130) est dépourvue de filetage.

11. Procédé d'ancrage d'un élément (30) sur une face extérieure (20e) d'un mur (20) d'un bâtiment, le mur définissant un côté intérieur (20i) et un côté extérieur (20e), comprenant les étapes suivantes:
- fixer ladite ligne à un dispositif d'ancrage (1) d'élément (30), le dispositif d'ancrage comprenant un moyen d'accroche (10) dudit élément, un moyen d'appui (12), un premier moyen partiel de fixation (130) et un moyen de guidage (131) apte à guider un deuxième moyen partiel de fixation (3, 300) agencé pour coopérer avec ledit premier moyen partiel ;
- fixer, depuis le coté intérieur et à l'aide dudit moyen de guidage (131), ledit deuxième moyen partiel de fixation (3, 300) audit premier moyen de fixation (130), de sorte à plaquer ledit moyen d'appui (12) contre la face extérieure (20e) du mur et avoir ledit moyen d'accroche tourné vers l'extérieur,
**caractérisé en ce qu'**il comprend les étapes suivantes:
- passer, depuis le côté intérieur (20i) du mur, une ligne (40) dans un trou (21) traversant ledit mur (20);
- tirer, depuis le côté intérieur (20i), ladite ligne (40) de sorte à introduire au moins ledit moyen de guidage (131) dans ledit trou traversant (21) en conservant le moyen d'accroche et le moyen d'appui du côté extérieure.

12. Procédé selon la revendication 11, dans lequel ledit élément à ancrer (30) comprend un câble (40), et ladite ligne comprend ledit câble.

13. Procédé selon la revendication 11, dans lequel, lors du tirage de ladite ligne, ledit premier moyen partiel de fixation (130) est introduit au moins partiellement dans ledit trou traversant (21).

## Patentansprüche

1. Vorrichtung (1) zur Verankerung eines Elements (30, 60) an einer Außenseite (20e) einer Mauer eines Gebäudes (20, 20e), die einen Außenteil (11) enthält, der mit einer Aufhängeeinrichtung (10) des Elements versehen und dazu bestimmt ist, nach außen gerichtet zu werden, die enthält:
- einen Zwischenteil (12), der eine Auflageeinrichtung auf der Außenseite bildet;
- einen Innenteil (13), der in ein die Mauer durchquerendes Loch (21) eingeführt werden kann, und wobei der Innenteil (13) eine erste Teilbefestigungseinrichtung (130) enthält,
**dadurch gekennzeichnet, dass** sie eine Führungseinrichtung (131) enthält, die in das Durchgangsloch (21) eingeführt werden kann, um eine zweite die Mauer durchquerende und zur Zusammenwirkung mit der ersten Teilbefestigungseinrichtung (130) geeignete Teilbefestigungseinrichtung (3, 300) zu führen.

2. Vorrichtung (1) nach Anspruch 1, wobei die Führungseinrichtung ein Rohr (131) aufweist, von dem ein Ende (131a) zur ersten Teilbefestigungseinrichtung (130) koaxial ist.

3. Vorrichtung (1) nach Anspruch 1, wobei der Zwischenteil (12) eine Öffnung (122) enthält, die für den Durchgang eines Kabels (40) eingerichtet ist.

4. Vorrichtung (1) nach Anspruch 3, die eine Anfügungseinrichtung (132a) des Kabels (40) an die Führungseinrichtung (131) im Wesentlichen in Höhe der ersten Teilbefestigungseinrichtung (130) enthält.

5. Vorrichtung (1) nach Anspruch 1, wobei die Aufhängeeinrichtung (10) zur ersten Teilbefestigungseinrichtung (130) im Wesentlichen koaxial ist.

6. Vorrichtung (1) nach Anspruch 1, wobei der Zwischenteil (12) eine größere Breite als der Innenteil (13) hat, so dass, wenn die Vorrichtung (1) befestigt ist, der Zwischenteil gegen die Außenseite (20e) der Mauer (20) gedrückt wird.

7. Vorrichtung (1) nach Anspruch 1, die einen starren Abschnitt enthält, der sich von einer die Auflageeinrichtung des Zwischenteils (12) bildenden Zone aus erstreckt, wobei der starre Abschnitt Abmessungen aufweist, die für eine Einführung in das Durchgangsloch (21) und eine automatische Blockierung der Vorrichtung (1) im Durchgangsloch (21), wenn eine seitliche Kraft angewendet wird, geeignet sind.

8. Bausatz (2), der eine Vorrichtung (1) nach Anspruch 1 und eine zweite Teilbefestigungseinrichtung (3, 300) enthält, die mit der ersten Teilbefestigungseinrichtung (130) zusammenwirken kann, um den Zwischenteil (12) gegen die Außenseite der Mauer (20) zu drücken.

9. Bausatz (2) nach Anspruch 8, wobei die erste und die zweite Teilbefestigungseinrichtung (131, 300) ein Mutter-Schraube-System bilden.

10. Bausatz (2) nach dem vorhergehenden Anspruch, wobei das Endstück (300a) der Teilbefestigungseinrichtung von der Art Schraube (300), das mit der anderen Teilbefestigungseinrichtung von der Art Mutter (130) zusammenwirken kann, kein Gewinde aufweist.

11. Verfahren zur Verankerung eines Elements (30) an einer Außenseite (20e) einer Mauer (20) eines Gebäudes, wobei die Mauer eine Innenseite (20i) und eine Außenseite (20e) definiert, das die folgenden Schritte enthält:
- Befestigen einer Leitung an einer Verankerungsvorrichtung (1) eines Elements (30), wobei die Verankerungsvorrichtung eine Aufhängeeinrichtung (10) des Elements, eine Auflageeinrichtung (12), eine erste Teilbefestigungseinrichtung (130) und eine Führungseinrichtung (131) enthält, die eine zweite Teilbefestigungseinrichtung (3, 300) führen kann, die eingerichtet ist, um mit der ersten Teileinrichtung zusammenzuwirken;
- von der Innenseite und mit Hilfe der Führungseinrichtung (131), Befestigen der zweiten Teilbefestigungseinrichtung (3, 300) an der ersten Befestigungseinrichtung (130), um die Auflageeinrichtung (12) gegen die Außenseite (20e) der Mauer zu drücken und die Aufhängeeinrichtung nach außen gerichtet zu haben,
**dadurch gekennzeichnet, dass** es die folgenden Schritte enthält:
- Führen, von der Innenseite (20i) der Mauer, einer Leitung (40) in ein die Mauer (20) durchquerendes Loch (21);
- Ziehen, von der Innenseite (20i), der Leitung (40), um mindestens die Führungseinrichtung (131) in das Durchgangsloch (21) einzuführen, wobei die Aufhängeeinrichtung und die Auflageeinrichtung an der Außenseite behalten werden.

12. Verfahren nach Anspruch 11, wobei das zu verankernde Element (30) ein Kabel (40) enthält, und die Leitung das Kabel enthält.

13. Verfahren nach Anspruch 11, wobei beim Ziehen der Leitung die erste Teilbefestigungseinrichtung (130) zumindest teilweise in das Durchgangsloch (21) eingeführt wird.

## Claims

1. Device (1) for anchoring an element (30, 60) on an outer surface (20e) of a wall of a building (20, 20e), comprising an external part (11) provided with a means (10) for attaching said element and intended to face towards the outside, comprising:
- an intermediate part (12) constituting a bearing means on said outer surface;
- an internal part (13) able to be inserted into a hole (21) passing through said wall,
and said internal part (13) comprising a first partial fastening means (130), **characterized in that** it comprises a guide means (131) able to be inserted into said through hole (21) in order to guide a second partial fastening means (3, 300) passing through said wall and able to cooperate with said first partial fastening means (130).

2. Device (1) according to Claim 1, in which said guide means comprises a tube (131) of which one end (131a) is coaxial with said first partial fastening means (130).

3. Device (1) according to Claim 1, in which said intermediate part (12) comprises an opening (122) arranged for the passage of a cable (40).

4. Device (1) according to Claim 3, comprising a means (132a) for joining said cable (40) to said guide means (131), substantially at the height of said first partial fastening means (130).

5. Device (1) according to Claim 1, in which said attachment means (10) is substantially coaxial with said first partial fastening means (130).

6. Device (1) according to Claim 1, in which said intermediate part (12) has a width greater than that of the internal part (13) such that, when the device (1) is fixed, said intermediate part is pressed against said outer surface (20e) of the wall (20).

7. Device (1) according to Claim 1, comprising a rigid portion extending from a bearing zone constituting said bearing means of the intermediate part (12), the rigid portion having dimensions adapted to an introduction into said through hole (21) and to automatically lock said device (1) in the through hole (21) when a lateral force is applied to it.

8. Kit (2) comprising an anchoring device (1) according to Claim 1 and a second partial fastening means (3, 300) able to cooperate with said first partial fastening means (130), in such a way as to press said intermediate part (12) against the outer surface of the wall (20).

9. Kit (2) according to Claim 8, in which the first and second partial fastening means (131, 300) form a nut-screw system.

10. Kit (2) according to the preceding claim, in which the final end (300a) of the partial fastening means of screw (300) type able to cooperate with the other partial fastening means of nut (130) type is not provided with a thread.

11. Method for anchoring an element (30) on an outer surface (20e) of a wall (20) of a building, the wall defining an inner side (20i) and an outer side (20e), comprising the following steps:
- fastening a line to a device (1) for anchoring an element (30), the anchoring device comprising a means (10) for attaching said element, a bearing means (12), a first partial fastening means (130) and a guide means (131) able to guide a second partial fastening means (3, 300) arranged to cooperate with said first partial means;
- fixing, from the inner side and with the aid of said guide means (131), said second partial fastening means (3, 300) to said first fastening means (130), in such a way as to press said bearing means (12) against the outer surface (20e) of the wall and to have said attachment means facing towards the outside, **characterized in that** it comprises the following steps:
- passing, from the inner side (20i) of the wall, a line (40) into a hole (21) passing through said wall (20);
- pulling, from the inner side (20i), said line (40) so as to introduce at least said guide means (131) into said through hole (21) while maintaining the attachment means and the bearing means on the outer side.

12. Method according to Claim 11, in which said element (30) to be anchored comprises a cable (40), and said line comprises said cable.

13. Method according to Claim 11, in which, when pulling said line, said first partial fastening means (130) is introduced at least partially into said through hole (21).
